# EUROPÄISCHE PATENTSCHRIFT

(11) **EP 1 150 767 B1**
(45) Veröffentlichungstag und Bekanntmachung des Hinweises auf die Patenterteilung: **04.06.2003**
(21) Anmeldenummer: 99963580.8
(22) Anmeldetag: 17.12.1999
(51) Int. Cl.: B01J 20/12, A23K 1/175

(54) **MYKOTOXIN-ADSORBENS**
MYCOTOXIN-ADSORBENTS
ADSORBANT DE MYCOTOXINES

(30) Priorität: 12.01.1999 DE 19900813
(43) Veröffentlichungstag der Anmeldung: 07.11.2001
(73) Patentinhaber: SÜD-CHEMIE AG, 80333 München (DE)
(72) Erfinder: SCHALL, Norbert, D-85476 Langenpreising (DE); SIMMLER-HÜBENTHAL, Hubert, D-85368 Moosburg (DE); FELDHAUS, Herrmann Gerardo, Pedregal de San Angel Mexico, D.F. 01900 (MX)
(74) Vertreter: Westendorp, Michael Oliver, Dr.
(86) Internationale Anmeldenummer: EP9910088
(87) Internationale Veröffentlichungsnummer: WO00041806

(56) Entgegenhaltungen:
- EP-A- 0 398 410
- WO-A-91/13555
- DE-A- 3 810 004
- US-A- 5 149 549
- US-A- 5 401 417
- DATABASE BIOSIS [Online] BIOSCIENCES INFORMATION SERVICE, PHILADELPHIA, PA, US September 1998 (1998-09) LEMKE S.L; GRANT P.L.; PHILLIPS T.D.: "Adsorption of zearalenone by organophilic montmorillonite" Database accession no. prev199800488990 XP002134584 in der Anmeldung erwähnt

## Beschreibung

Die vorliegende Erfindung betrifft ein Mykotoxin-Adsorbens, insbesondere zur Adsorption von Aflatoxinen und anderen Mykotoxinen (Nicht-Aflatoxinen) in Futtermitteln.

### Hintergrund der Erfindung

Unter dem Begriff Mykotoxine wird eine Gruppe von toxischen Substanzen zusammengefaßt, die von verschiedenen, natürlich vorkommenden Pilzen gebildet werden. Derzeit sind etwa 300 bis 400 Mykotoxine bekannt. Als natürlicher Lebensraum für diese Pilze werden allgemein Getreidearten und Körnerfrüchte angesehen. Während sich einige Pilzarten bereits auf dem noch abreifenden Getreidekorn in der Ähre entwickeln, befallen andere Arten vornehmlich lagernde Getreidevorräte, wenn eine gewisse Mindestfeuchte und Umgebungstemperatur gegeben ist.

Alle sog. Mykotoxine haben eine gesundheitsschädliche Wirkung primär auf mit infizierten Getreidearten gefütterte landwirtschaftliche Nutztiere, jedoch sekundär über die Nahrungskette auch auf den Menschen. Die Aflatoxine sind beispielsweise verantwortlich für die sog. X-Krankheit von Truthühnern, der 1960/61 in Großbritannien ca. 100.000 Tiere zum Opfer fielen, die mit verschimmeltem Erdnußmehl gefüttert worden waren.

### Einige der wichtigsten Mykotoxine sind:

Aflatoxin B₁, B₂, G₁, G₂: Diese werden von diversen Aspergillus-Arten gebildet. Aflatoxin B₁ ist bereits in Mikrogramm-Mengen carcinogen und verursacht Magen- und Leberschäden.

Ochratoxin wird von Aspergillus ochraceus und Penicillium viridicatum gebildet und verursacht Nierenschädigungen.

Zearalenon wird von Fusarium graminearum gebildet, der auf Mais, Gerste und Weizen wächst. Es ist ein östrogenähnlicher Stoff, welcher Fruchtbarkeitsstörungen hervorruft und im Verdacht steht, carcinogen zu sein.

Fumonisin wird von Pilzen der Gattung Fusarium gebildet und wird. u.a. wird für Pferdesterben verantwortlich gemacht.

T2-Toxine und T2-ähnliche Toxine (Trichothecene) werden von Pilzen der Gattung Fusarium gebildet.

Daneben gibt es eine Vielzahl weiterer Mykotoxine wie Deoxynivalenol, Diacetoxyscirpenol, Patulin, Citrinin, Byssochlamsäure, Ochratoxin, Sterigmatocystin, Moniliformin, Ergot-Alkaloide, Ergochrome, Cytochalasane, Penicillinsäure, Zearalenon, Rubratoxine, Thrichothecene (vgl. Römpps, Chemie-Lexikon, 8. Auflage, 1985, S. 2888), und andere mehr, die jedoch nur vereinzelt in solchen Konzentrationen in Futtermitteln auftreten, welche gesundheitliche Probleme verursachen.

Durch die Entwicklung empfindlicherer Analysenmethoden konnten in verschiedenen Futtermitteln mehrere unterschiedliche Toxine ermittelt werden, die als Verursacher von gesundheitlichen Problemen bei Mensch und Tier erkannt wurden. Eine Reihe von Studien konnte zeigen, daß mehrere Toxine gleichzeitig z.B. in Futtermitteln vorkommen können. Dieses gleichzeitige Auftreten kann die Toxizität der Mykotoxine erheblich beeinflussen. Neben akuten Schäden an Nutztieren, die mykotoxinkontaminierte Futtermittel erhalten, werden in der Literatur auch gesundheitliche Schäden an Menschen diskutiert, welche durch dauerhafte Aufnahme von schwach mit Mykotoxinen kontaminierten Nahrungsmitteln entstehen.

In einer neueren Untersuchung verdächtiger Futterproben wurden Aflatoxin, Deoxynivalenon oder Fumonisin in über 70% der untersuchten Proben gefunden (vgl. "Understanding and coping with effects of mycotoxins in life dog feed and forage", North Carolina Cooperative Extension Service, North Carolina State Univ.; http:/www.ces.ncsu.edu/drought/dro-29.html)

In vielen Fällen sind die ökonomischen Auswirkungen in Bezug auf eine verringerte Produktivität der Tiere, das verstärkte Auftreten von Krankheiten durch eine Immunsuppression, die Schädigung lebenswichtiger Organe, und die Beeinträchtigung' der Reproduktivität größer als die durch den Tod von Tieren durch Mykotoxinvergiftung verursachten Auswirkungen.

Die Gruppe der Aflatoxine wird aufgrund ihrer spezifischen Molekularstruktur mit hoher Spezifität an einige mineralische Adsorbentien wie z.B. Zeolith, Bentonit, Aluminiumsilicat und andere fixiert (vgl. A.-J. Ramos, J. Fink-Gremmels, E. Hernandez, "Prevention of Toxic Effects of Mycotoxins by Means of Nonnutritive Adsorbent Compounds, J. of Food Protection, Bd. 59(6), 1996, S. 631-641). Dies trifft jedoch für die meisten anderen Mykotoxine nicht zu. Es wurde versucht, die Adsorptionskapazität mineralischer Adsorbentien auch auf die Nicht-Aflatoxine auszuweiten.

In der WO 91/13555 ist ein trockener teilchenförmiger Tierfutterzusatz beschrieben, der Phyllosilicatteilchen enthält, die mit einem Komplexierungsmittel (sequestering agent) beschichtet sind. Zwar kann hierdurch eine Erhöhung der Sorptionsrate erzielt werden, eine vollständige (> 90 %) Entfernung der eingesetzten Toxine kann jedoch nicht erreicht werden. Mit Ionenaustauscherharzen oder qualitativ hochwertigen Aktivkohlen werden im Stand der Technik zwar gute Ergebnisse beschrieben, solche Lösungen sind aus Kostengründen jedoch nicht praxisrelevant.

Organophile Tone werden u.a. im Stand der Technik zur Behandlung von flüssigem Abfall mit organischen Verunreinigungen verwendet, um diesen zu verfestigen und die Entsorgung zu erleichtern (vgl. EP-0,560,423).

S.L. Lemke, P.G. Grant und T.D. Phillips beschreiben in "Adsorption of Zearalenone by organophilic Montmorillonite Clay", J. Agric. Food Chem. (1998), S. 3789-3796 einen organisch modifizierten sauren Montmorillonit-Ton, der in der Lage ist, Zearalenon zu adsorbieren. Die besten Adsorptionsraten zeigten Tone, die mit C₁₆-Alkylgruppen enthaltenden Kationen, nämlich Hexadecyltrimethylammonium (HDTMA) und Cetylpyridinium (CP) ausgetauscht wurden. Nennenswerte Adsorptionsraten wurden erst ab einer Belegung von mehr als etwa 75% der KAK (Kationenaustauschkapazität) erzielt.

Die EP-A-0 398 410 betrifft ein Verfahren zum Immobilisieren von umweltschädlichen organischen Substanzen durch Absorption an ein mit einer quaternären Ammoniumverbindung modifiziertes Schichtsilikat. Als quaternäre Ammoniumverbindung wird vorzugsweise ein Alkylphenylammoniumsalz verwendet.

Die US-A-5,401,417 betrifft die selektive Adsorption von organischem Material aus Wasser mittels modifizierter Tonmineralien. Zur Modifikation des Schichtsilikats werden besonders bevorzugt quaternäre Ammoniumsalze wie Alkylammoniumverbindungen und Alkylbenzylammoniumverbindungen verwendet.

In Lemke, S.L., Ottinger, S.E. und Phillips, T.D., Book of Abstracts, 216th ACS National Meeting, Boston, 1998, ist die Verwendung von organisch modifiziertem Ton zur Adsorption von Fumonisin B1 beschrieben. Für die Organophilierung werden quaternäre Ammoniumverbindungen verwendet, die eine C16-Alkylgruppe aufweisen.

Aufgabe der vorliegenden Erfindung ist es, ein Adsorbens auf der Basis von Schichtsilicaten (Phyllosilicaten) bereitzustellen, welches nicht nur Aflatoxine, sondern auch andere wichtige Mykotoxine (Nicht-Aflatoxine) mit hoher Effektivität adsorbiert und gleichzeitig noch so preiswert ist, daß es in der Praxis eingesetzt werden kann. Weiterhin soll das Adsorbens auch unter physiologischen Bedingungen, wie sie beispielsweise nach der Aufnahme mit dem Futtermittel im Verdauungstrakt der Nutztiere auftreten, eine stabile Adsorption von Mykotoxinen aufweisen.

Diese Aufgabe wird durch ein Mykotoxin-Adsorbens gemäß Aspruch 1 gelöst. Es wurde überraschend gefunden, daß durch geeignete Modifikation eines Schichtsilicats bzw. eines Teils davon Mykotoxin-Adsorbentien bereitgestellt werden können, die sowohl Aflatoxine als auch Nicht-Aflatoxine, wie Zearalenon, Ochratoxin, Deoxynivalenon, T2-Toxine oder Fumonisin wirkungsvoll adsorbieren können und zudem kostengünstig sind.

So kann nach einem ersten erfindungsgemäßen Aspekt gemäß Anspruch 1a) durch Modifikation eines Schichtsilicats mit einer relativ geringen Menge einer quaternären Oniumverbindung mit einer langkettigen C₁₀- bis C₂₂-Alkylgruppe und mindestens einem aromatischen Substituenten bereits eine signifikante Steigerung der Adsorptionsleistung eines solchen Materials für Mykotoxine erzielt werden.

Unter die bei dem erfindungsgemäßen Adsorbens verwendbaren Schichtsilicate fallen die in Ullmanns Encyklopädie der technischen Chemie, Bd. 21, S. 370-375 (1982) angeführten Schichtsilicate. Insbesondere können die aktivierbaren natürlichen und synthetischen Tonminerale, wie z.B. Smektite einschließlich Montmorillonit, Beidellit, Nontronit, Wolchonskoit, Stevensit, Hectorit, Swinefordit, Saponit und Sauconit, die Vermiculite, die Illite, die Wechsellagerungsminerale (mixed layer minerals), Palygorskit (Attapulgit) und Sepiolith verwendet werden. Die beiden letztgenannten werden auch als Hormite bezeichnet.

Nach einer bevorzugten erfindungsgemäßen Ausführungsform handelt es sich bei dem Schichtsilicat um ein Dreischichtsilicat, z.B. um einen natürlich vorkommenden smektitischen Ton, insbesondere einen Bentonit-Ton. Bevorzugt werden insbesondere quellfähige Schichtsilicate mit einem relativ hohen Quellvolumen, wie Calcium-Bentonite mit einem Quellvolumen von etwa 10 ml/g oder mehr, oder durch Ionenumtausch in die Na⁺-Form überführte Schichtsilicate mit einem Quellvolumen von etwa 20 ml/g oder mehr. Es wird angenommen, daß durch die hohe Quellfähigkeit die spezifische Adsorptionsleistung positiv beeinflußt wird. Es können aber auch sauer aktivierte Bentonite verwendet werden.

Es wurde gefunden, daß sehr gute Adsorptionsleistungen für Mykotoxine bereits bei einer Austauschrate erzielt werden, die deutlich unter 75% der Kationenaustauschkapazität (KAK) des Schichtsilicats liegt. So zeigen die erfindungsgemäßen Adsorbentien bereits bei dem Austausch von 2 bis 15%, insbesondere von 2 bis 10% der KAK, eine erhebliche Adsorptionsleistung für Mykotoxine.

Nach einer bevorzugten Ausführungsform kann beispielsweise ein Bentonit mit einer Kationenaustauschkapazität von 50 bis 100 meq/100 g gleichmäßig mit einer Menge an Oniumionen, die etwa 3 bis 15 meq/100 g entsprechen, belegt werden.

Als quaternäre Oniumverbindungen können insbesondere quaternäre Ammoniumverbindungen und Pyridiniumverbindungen verwendet werden. Mit der Maßgabe, daß die quaternären Oniumverbindungen (mindestens) eine langkettige C₁₀- bis C₂₂-Alkylgruppe und mindestens einen aromatischen Substituenten enthalten, können insbesondere alle zur organischen Modifikation von Schichtsilicaten geeigneten Oniumverbindungen, die dem Fachmann auf diesem Gebiet bekannt sind, verwendet werden. Die quaternären Oniumverbindungen können z.B. auch einen Aralkylsubstituenten (als aromatischen Substituenten) enthalten.

Nach einer bevorzugten Ausführungsform wird als quaternäre Oniumverbindung Stearyl (Talgfett)-Benzyl-Dimethyl-Ammoniumchlorid (C₁₆-C₁₈-DMBA) verwendet. Weitere bevorzugte Oniumverbindungen sind:
Cocosalkyl-Dimethyl -Benzyl-Ammoniumchlorid (C₁₂-C₁₆-DMBA)
Dimethyl-Lauryl-Benzyl-Ammoniumchlorid (C₁₂-C₁₄-DMBA)
Distearyl-Methyl-Benzyl-Ammoniumchlorid (C₁₆-C₁₈-DMBA)
Quaternisiertes Talgfett-Immidazolinium-Methasulfat.

Die quaternären Oniumverbindungen können entweder direkt eingesetzt werden, oder durch gemeinsamen Einsatz von sekundären und tertiären Aminen mit Säure in situ während der Aktivierung des Schichtsilicats gebildet werden.

Es wird angenommen, daß die aromatische Gruppe(n) und die langkettige Alkylgruppe der quaternären Oniumverbindung bei der Erzielung der vorteilhaften Adsorptionsleistungen zusammenwirken. Ohne eine Beschränkung der vorliegenden Erfindung auf einen theoretischen Mechanismus wird vermutet, daß die in praktisch allen Mykotoxinen vorhandenen vicinalen oder isolierten Carbonylgruppen an der Wechselwirkung mit den erfindungsgemäßen Adsorbentien beteiligt sind.

Neben einer verbesserten Adsorptionsleistung für Mykotoxine wurde auch gefunden, daß die erfindungsgemäßen Adsorbentien bei einem Absinken des pH-Werts, wie es beispielsweise bei der Aufnahme von Futtermitteln in das saure Magenmilieu eines monogastrischen Nutztieres auftritt, oder auch beim Übergang von einem sauren zu einem neutralen bzw. leicht alkalischen pH-Wert, wie er im Verlauf der Passage des Nahrungsbreis durch den Verdauungstrakt erfolgt, eine effiziente und stabile Adsorption von Mykotoxinen aufweisen.

Nach einem zweiten Aspekt der Erfindung gemäß Anspruch 1b) enthält das Mykotoxin-Adsorbens ein Gemisch aus einem organisch modifizierten Schichtsilicat und einem nicht organisch modifizierten Schichtsilicat, wobei das im Gemisch enthaltene organisch modifizierte Schichtsilicat mindestens zu 75%, bezogen auf die gesamte KAK, mit einer quaternären Oniumverbindung ausgetauscht ist.

Die gemäß dieser erfindungsgemäß verwendeten Ausführungsform verwendeten Schichtsilicate entsprechen den vorstehend angegebenen.

Es wurde gefunden, daß gemäß dieser erfindungsgemäßen Ausführungsform auch bei Verwendung von quaternären Oniumverbindungen, die keine(n) aromatischen Substituenten enthalten, gute Adsorptionsleistungen für Mykotoxine erzielt werden können. Prinzipiell können somit alle zur organischen Modifikation von Schichtsilicaten geeigneten Oniumverbindungen, die dem Fachmann auf diesem Gebiet bekannt sind, verwendet'werden. Es werden jedoch solche quarternären Ammoniumverbindungen bevorzugt, die (mindestens) eine langkettige C₁₀-C₂₂-Alkylgruppe und vorzugsweise mindestens einen aromatischen Substitituenten, wie vorstehend beschrieben, aufweisen.

In der Regel wird die Mischung etwa 0,1 bis 50 Gew.-%, insbesondere etwa 0,5 bis 20 Gew.-%, an organisch modifiziertem Schichtsilicat enthalten. Es wurde überaschenderweise gefunden, daß bereits bei einem Anteil von mehr als etwa 2 Gew.-% an organisch modifiziertem Schichtsilicat im Gemisch eine praktisch vollständige (mehr als 90 %) Adsorption der Mykotoxine (Aflatoxine und Nicht-Aflatoxine) auch bei sauren pH-Werten erfolgt. Es wird daher angenommen, ohne daß die Erfindung auf einen theoretischen Mechanismus beschränkt ist, daß die hydrophobe Oberfläche des organisch modifizierten Schichtsilicats und die Oberfläche des nicht modifizierten Schichtsilicats bei der effektiven Adsorption und geringen Desorption der Mykotoxine zusammenwirken. So wird beispielsweise angenommen, daß auch im Gemisch aus organisch modifiziertem und nicht modifiziertem Schichtsilicat die Aflatoxine in erster Linie an das nicht modifizierte Schichtsilicat binden, so daß die Oberfläche des organisch modifizierten Schichtsilicats zur Adsorption der Nicht-Aflatoxine, die nicht an das unmodifizierte Schichtsilicat adsorbiert werden können, zur Verfügung steht. Somit ist eine gute Absorptionsleistung bezüglich der Nicht-Aflatoxine auch bei verhältnismäßig hohen Aflatoxin-Konzentrationen gewährleistet.

Da das organisch modifizierte Schichtsilicat den wesentlichen Kostenfaktor der Mischung darstellt, wird in der Praxis ein möglichst geringer Anteil an organisch modifiziertem Schichtsilicat in der Mischung gewählt, bei dem jedoch eine gute Adsorptionsleistung zu beobachten ist. Die optimalen Anteile an organisch modifiziertem bzw. nicht modifiziertem Schichtsilicat können im Einzelfall anhand von routinemäßigen Versuchen durch den Fachmann ermittelt werden.

Nach einer bevorzugten Ausführungsform werden jedoch in der Regel etwa 0,5 bis 30 Gew.-%, insbesondere bis 15 Gew.-%, insbesondere bis 10 Gew.-% an organisch modifiziertem Schichtsilicat in der Mischung verwendet.

Die Adsorption der Mykotoxine in einer wäßrigen Lösung bleibt auch bei einem Absinken des pH-Wertes bzw. einem Übergang von saurem zu neutralem bzw. leicht alkalischen pH, wie er unter physiologischen Bedingungen bei der Verdauung von Futtermitteln vorkommt, stabil, d.h. die Desorptionsrate ist gering.

Ein weiterer Vorteil der erfindungsgemäßen Adsorbens-Mischung besteht darin, daß durch den verhältnismäßig geringeren Anteil an organisch modifiziertem Schichtsilicat im Gemisch an sich erwünschte hydrophobe Stoffe, wie lipophile Vitamine oder essentielle Fettsäuren, auch nur in geringerem Ausmaß an das Adsorbens gebunden werden und somit für die Resorption im Verdauungstrakt zur Verfügung stehen.

Der gleiche Vorteil ergibt sich bei einem verhältnismäßig geringen anteiligen Austausch im Falle der Verwendung eines teilweise organisch modifizierten Schichtsilicats.

Nach einem weiteren erfindungsgemäßen Aspekt wird ein Futtermittel-Zusatz bereitgestellt, der ein erfindungsgemäßes Adsorbens enthält.

Es können auch Vormischungen hergestellt werden, die einen recht hohen Anteil von mehr als etwa 50% an organisch modifiziertem Schichtsilicat enthalten, und die in einem zweiten Schritt zur Herstellung eines erfindungsgemäßen Adsorbens bzw. eines Futtermittel-Zusatzes mit einem nichtmodifizierten Schichtsilicat gemischt werden.

Die erfindungsgemäßen Mykotoxin-Adsorbentien können weitere Bestandteile enthalten, die für die jeweilige Verwendung nützlich erscheinen, z.B. Futterzusatzstoffe oder Mittel zur (enzymatischen) Detoxifizierung von Mykotoxinen.

Die Kationenaustauschkapazität wurde wie folgt bestimmt:

5 g Ton wurden durch ein 63 µm-Sieb gesiebt und bei 110°C getrocknet. Danach wurden genau 2 g eingewogen und mit 100 ml 2 N NH₄Cl-Lösung versetzt. Die Suspension wurde unter Rückfluß eine Stunde lang gekocht. Nach einer Standzeit von ca. 16h wurde der NH₄⁺-Ton über eine Membranfilternutsche abfiltriert und bis zur weitgehenden Ionenfreiheit mit VE-Wasser (ca. 800 ml) gewaschen. Der Nachweis der Ionenfreiheit des Waschwassers wurde auf NH₄⁺-Ionen mit dem dafür empfindlichen Neßlers-Reagens (Fa. Merck) durchgeführt. Der ausgewaschene NH₄⁺-Ton wurde vom Filter abgenommen, bei 110°C 2h getrocknet, gemahlen, gesiebt (63 µm-Sieb) und nochmals bei 110°C 2h getrocknet. Danach wird der NH₄⁺-Gehalt des Bentonits nach Kjeldahl bestimmt. Die KAK des Tons ist der mittels Kjeldahl ermittelte NH₄⁺-Gehalt des NH4⁺-Tons. Die Angaben erfolgen in mval/100g Ton.

Die Erfindung wird nun anhand der nachstehenden Beispiele näher erläutert.

Die verschiedenen Mykotoxine wurden als kristalline Reinsubstanzen (SIGMA AG) beschafft und in Methanol bzw. Acetonitril aufgenommen (50 µg/ml). Für die Durchführung der Adsorptionsversuche wurden unter Verwendung von Pufferlösungen (Dikaliumhydrogenphosphat + Citronensäure) Verdünnungen hergestellt, welche je 100 µg der verschiedenen Toxine pro Liter enthielten.

### Beispiel 1 (Vergleich)

Für die Adsorptionsversuche wurde ein natürlicher Ca-Bentonit verwendet, der eine Kationenaustauschkapazität von 90 mVal/100g aufweist. Ein vollständiger Austausch der Zwischenschichtkationen (100% der KAK) erfolgte gemäß dem Stand der Technik (S.L. Lemke, P.G. Grant und T.D. Phillips "Adsorption of Zearalenone by Organophilic Montmorillonite Clay", J. Agric. Food Chem. (1998), S. 3790) mit folgenden quaternären Ammoniumionen:

| | |
|---|---|
| CP | Cetylpyridiniumchlorid |
| HDTMA | Hexadecyl-Trimethyl-Ammoniumchlorid |
| SBDMA | Stearyl -Benzyl -Dimethyl -Ammoniumchlorid |
| ODDBMA | Octadecyl-Dibenzyl-Methyl-Ammoniumchlorid |

Die organophilierten Bentonite wurden getrocknet und feinvermahlen, so daß der Rückstand auf einem 90 µ-Sieb weniger als 10% betrug. Anschließend wurden sie jeweils in einer Menge von 0,02 Gew.-% mykotoxinhaltigen wäßrigen Lösungen (100ml) zugesetzt, welche je 100 µg der drei Mykotoxine Aflatoxin B1, Ochratoxin A und Zearalenon auf 11 wäßriger Lösung (pH 7) enthielten.

Die so hergestellten Suspensionen wurden bei Raumtemperatur 1 Stunde über Kopf geschüttelt und anschließend 5 Minuten bei 1500 Upm zentrifugiert. Der klare Überstand wurde mit 2 ml Hexan extrahiert und die Hexanphase mittels HPLC auf die in der Lösung verbliebenen Mengen an Toxinen untersucht.

Die HPLC-Bestimmung erfolgte bei den folgenden Bedingungen:

| | |
|---|---|
| Säule | Spherisorb ODS-2 125 x 4 mm |
| Fließmittel | |
| Aflatoxin | 600 ml 1 mmol NaCl-Lösung/200 ml Acetonitril/200 ml Methanol |
| Ochratoxin | 570 ml Acetonitril/410 ml Wasser/20 ml Essigsäure |
| Zearalenon | 570 ml Acetonitril/410 ml Wasser/20 ml Essigsäure |
| Flußrate | 1,5 ml/min |
| Detektor | Fluoreszenz |
| Wellenlänge | EX 365 nm / EM 455 nm |
| Ofentemp. | 30°C (Aflatoxin, Ochratoxin); 40°C (Zearalenon). |

Anhand der Ergebnisse wurden die prozentualen Adsorptionsraten berechnet. Die erhaltenen Ergebnisse sind in Tabelle I zusammengefaßt.

**Tabelle I**

| Einfluß des Oniumiones verschiedener Organotone auf die Adsorption von Mykotoxinen | | | |
|---|---|---|---|
| | Aflatoxin B1 Adsorption [%] | Zearalenon Adsorption [%] | Ochratoxin Adsorption [%] |
| 100 % CP-Organoton | 65,4 | 43,5 | 38,7 |
| 100 % HDTMA-Organoton | 78,2 | 45,8 | 46,1 |
| 100 % SBDMA-Organoton | 88 | 78,3 | 82,5 |
| 100 % ODDBMA-Organoton | 86,5 | 82,8 | 85,4 |

Aus der Tabelle I ist ersichtlich, daß die SBDMA- und ODDBMA-Organotone sowohl Aflatoxine als auch Nicht-Aflatoxine deutlich besser adsorbierten als Die CP- und HDTMA-Organotone gemäß Stand der Technik.

### Beispiel 2

Die wie vorstehend in Beispiel 1 beschrieben hergestellten, mit CP, HDTMA bzw. SBDMA modifizierten Bentonite. wurden mit natürlichem nicht modifiziertem Ca-Bentonit (vgl. Bsp.1 oben) mit vergleichbarer Kornfeinheit im folgenden Verhältnis gemischt: 96 Gew.-% Ca-Bentonit + 4 Gew.-% Organoton.

Die organophilierten Bentonite wurden in einer Menge von 0,5 Gew.-% mykotoxinhaltigen wäßrigen, Lösungen (100 ml) zugesetzt, welche je 100 µg der drei Mykotoxine Aflatoxin B1, Ochratoxin A und Zearalenon auf 11 wäßriger Lösung (pH 7) enthielten.

Die so hergestellten Suspensionen wurden bei Raumtemperatur 1 Stunde über Kopf geschüttelt und anschließend 5 Minuten bei 1500 Upm zentrifugiert. Der klare Überstand wurde mit 2 ml Hexan extrahiert und die Hexanphase wie in Beispiel 1 beschrieben mittels HPLC untersucht.

Anhand der Ergebnisse wurden die prozentualen Adsorptionsraten berechnet. Die erhaltenen Ergebnisse sind in Tabelle II zusammengefaßt.

**Tabelle II**

| Einfluß des Oniumiones verschiedener Organotone in Tongemischen auf die Adsorption von Mykotoxinen | | | |
|---|---|---|---|
| | Aflatoxin B1 Adsorption [%] | Zearalenon Adsorption [%] | Ochratoxin Adsorption [%] |
| 100 % Ca-Bentonit | 90,1 | 18,3 | 11,8 |
| | | | |
| 96 % Ca-Bentonit | | | |
| + 4 % CP-Organoton | 90,3 | 61,3 | 57,6 |
| + 4 % HDTMA-Organoton | 89,2 | 62,4 | 65,7 |
| + 4 % SBDMA-Organoton | 90,6 | 90,4 | 93,2 |

Aus der Tabelle II ist ersichtlich, daß das erfindungsgemäße Mykotoxin-Adsorbens, das ein Gemisch aus unmodifiziertem Bentonit und mit SBDMA organisch modifiziertem Bentonit enthielt, im Gegensatz zu den Adsorbentien gemäß Stand der Technik sowohl Aflatoxin als auch die Nicht-Aflatoxine fast vollständig adsorbierte.

### Beispiel 3

Ein wie vorstehend in Beispiel 1 beschrieben hergestellter mit SBDMA modifizierter Bentonit wurde mit natürlichem nicht modifiziertem Ca-Bentonit mit vergleichbarer Kornfeinheit in den in der nachstehenden Tabelle III angegebenen Gewichtsverhältnissen gemischt.

Die so erhaltenen Gemische wurden in einer Menge von 0,5 Gew.-% mykotoxinhaltigen wäßrigen Lösungen (100 ml) zugesetzt, welche je 100 µg der drei Mykotoxine Aflatoxin B1, Ochratoxin A und Zearalenon auf 11 wässriger Lösung bei pH 3 bzw. pH 7 enthielten.

Die so hergestellten Suspensionen wurden bei Raumtemperatur 1 Stunde über Kopf geschüttelt und anschließend 5 Minuten bei 1500 Upm zentrifugiert. Der klare Überstand wurde mit 2 ml Hexan extrahiert und die Hexanphase wie in Beispiel 1 beschrieben mittels HPLC untersucht.

Anhand der Ergebnisse wurden die prozentualen Adsorptionsraten berechnet. Die erhaltenen Ergebnisse sind in Tabelle III zusammengefaßt.

**Tabelle III**

| Mykotoxinadsorption an Mischungen aus unmodifiziertem und organisch modifiziertem Bentonit | | | | | | |
|---|---|---|---|---|---|---|
| | Aflatoxin B1 Adsorption [%] | | Zearalenon Adsorption [%] | | Ochratoxin Adsorption [%] | |
| | pH 7 | pH 3 | pH 7 | pH 3 | pH 7 | pH3 |
| Anteil SBDMA-Organoton in Ca-Bentonit | | | | | | |
| 0% | 90,1 | 96,1 | 18,3 | 29,5 | 11,8 | 19,2 |
| 2% | 92,1 | 95,4 | 82 | 89,8 | 79,4 | 84,8 |
| 3% | 90 | 96,3 | 88,9 | 92,3 | 90,7 | 88,5 |
| 4% | 90,6 | 96 | 90,4 | 91,7 | 93,2 | 90,2 |
| 6% | 91,9 | 95,8 | 90,8 | 93,4 | 95,5 | 90,5 |

Aus der Tabelle III ist ersichtlich, daß bereits durch 2 Gew.-% SBDMA-Organoton in der Mischung eine sehr gute Adsorption auch der Nicht-Aflatoxine erzielt werden konnte.

### Beispiel 4

Es wurde ein organophilierter SBDMA-Bentonit allgemein wie in Beispiel 1 beschrieben hergestellt, wobei weniger SBDMA zur Modifikation eingesetzt wurde, um einen gleichmäßigen Austausch in Höhe von 8% der KAK des Bentonits zu erzielen.

Weiterhin wurde ein wie vorstehend in Beispiel 1 beschrieben hergestellter zu 100% der KAK ausgetauschter SBDMA-Bentonit mit natürlichem nicht modifiziertem Ca-Bentonit mit vergleichbarer Kornfeinheit im Verhältnis 96 Gew.-% Ca-Bentonit + 4 Gew.-% SBDMA-Organoton gemischt.

Zu je 100 ml der wäßrigen Toxinlösung wurden 500 mg der verschiedenen Adsorbentien dosiert, was einer Aufwandmenge von 0,5% bezogen auf die vorgelegte Lösung entspricht.

Die so hergestellten Suspensionen wurden bei Raumtemperatur 1 Stunde über Kopf geschüttelt und anschließend 5 Minuten bei 1500 Upm zentrifugiert. Der klare Überstand wurde mit 2 ml Hexan extrahiert und die Hexanphase wie in Beispiel 1 beschrieben mittels HPLC untersucht.

Für die Desorptionsversuche wurde der nach der Zentrifugation und Abtrennung der Flüssigphase erhaltene Feststoff in je 100 ml einer frischen Pufferlösung mit dem gewünschten pH-Wert resuspendiert, die Suspension bei Raumtemperatur 1 Stunde über Kopf geschüttelt und weiter behandelt wie oben beschrieben.

**Tabelle IV**

| Adsorptions-/Desorptionsverhalten und dessen Beeinflussung durch den pH-Wert des Milieus | | | | |
|---|---|---|---|---|
| | Adsorption /Desorption an SBDMA -Organoton. belegt mit 8% der KAK | | Adsorption/ Desorption an Gemisch aus Ca-Bentonit +4 % SBDMA-Organoton | |
| **Aflatoxin B1** | | | | |
| Adsorption bei pH 7 | >97,5% | | >97,5% | |
| Desorption I bei pH 3 | | <2,5% | | < 2,5% |
| Desorption II bei pH 7 | | <2,5% | | < 2,5% |
| **Ochratoxin** | | | | |
| Adsorption bei pH 7 | 87,5% | | 93,2% | |
| Desorption I bei pH 3 | | 7,2% | | 3,2% |
| Desorption II bei pH 7 | | 5,1% | | 4,6% |

Aus der Tabelle ist ersichtlich, daß sowohl mit dem zu 8% der KAK ausgetauschten SBDMA-Organoton, als auch dem Gemisch aus 96% Ca-Bentonit und 4% SBDMA-Organoton eine sehr gute Adsorptionsrate bei pH 7 erzielt wurde.

Sowohl bei einer Senkung des pH-Werts des Milieus auf pH 3 als auch einer anschließenden erneuten Anhebung des pH-Werts auf 7 trat nur eine sehr geringe Desorption auf. Dadurch wird die stabile Adsorption an die erfindungsgemäßen Organotone bzw. Organoton-Gemische belegt.

Für nicht-organisch modifizierten Bentonit lag die Adsorptionsrate bei < 20% für Ochratoxin und die Gesamt-Desorption (I + II) war > 40%. Bei Verwendung von vollständig ausgetauschtem SBDMA-Organoclay wurde eine vollständige Adsorption > 97,5% für Aflatoxin und Ochratoxin erzielt, die Desorptionen (I, II) lagen bei < 2,5%.

## Patentansprüche

1. Mykotoxin-Adsorbens, enthaltend
a) ein organisch modifiziertes (organophiles) Schichtsilicat, wobei zur Modifikation quaternäre Oniumverbindungen mit mindestens einer langkettigen C₁₀- bis C₂₂-Alkylgruppe und mindestens einem aromatischen Substituenten verwendet werden, und wobei 2 bis 15% der austauschfähigen Kationen des Schichtsilicats gegen quaternäre Oniumverbindungen ausgetauscht werden,
oder
b) ein Gemisch aus einem nicht organisch modifizierten Schichtsilicat und einem mindestens zu 75%, bezogen auf die gesamte Kationenaustauschkapazität (KAK), organisch modifiziertem Schichtsilicat.

2. Mykotoxin-Adsorbens nach Anspruch 1, **dadurch gekennzeichnet, dass** als quaternäre Oniumverbindung eine quaternäre Ammoniumverbindung, insbesondere mit einer C₁₄- bis C₁₈-Alkylgruppe, verwendet wird.

3. Mykotoxin-Adsorbens nach Anspruch 1 oder 2, **dadurch gekennzeichnet, dass** als quaternäre Oniumverbindung Stearyl-Benzyl-Dimethyl-Ammoniumchlorid, Cocosalkyl-Dimethyl-Benzyl-Ammoniumchlorid, Dimethyl-Lauryl-Benzyl -Ammoniumchlorid, Distearyl-Methyl-Benzyl-Ammoniumchlorid oder quaternisiertes Talgfett-Immidazolinium-Methasulfat verwendet wird.

4. Mykotoxin-Adsorbens nach einem der vorstehenden Ansprüche, **dadurch gekennzeichnet, dass** als Schichtsilicat ein smektitisches Tonmineral verwendet wird.

5. Mykotoxin-Adsorbens nach einem der vorstehenden Ansprüche, **dadurch gekennzeichnet, dass** als Schichtsilicat ein montmorillonithaltiger Ton, insbesondere Bentonit, verwendet wird.

6. Mykotoxin-Adsorbens nach einem der Ansprüche 1 a), 2 bis 5, **dadurch gekennzeichnet, dass** 2 bis 10 % der austauschfähigen Kationen des Schichtsilicats gegen quaternäre Oniumverbindungen ausgetauscht sind.

7. Mykotoxin-Adsorbens nach einem der Ansprüche 1 b), 2 bis 5, **dadurch gekennzeichnet, dass** die Mischung 0,1 bis 50 Gew.-%, insbesondere 0,5 bis 20 Gew.-%, und vorzugsweise 0,5 bis 10 Gew.-% an organisch modifiziertem Schichtsilicat enthält.

8. Mykotoxin-Adsorbens nach einem der Ansprüche 1 b), 4, 5, 7, **dadurch gekennzeichnet, dass** zur organischen Modifikation quaternäre Oniumverbindungen mit mindestens einer langkettigen C₁₀- bis C₂₂-Alkylgruppe und mindestens einem aromatischen Substituenten verwendet werden.

9. Futtermittel-Zusatz, enthaltend ein Mykotoxin-Adsorbens nach einem der vorstehenden Ansprüche.

10. Vormischung zur Herstellung eines Mykotoxin-Adsorbens oder Futtermittel-Zusatzes nach einem der Ansprüche 1 bis 8, enthaltend mehr als 50% an organisch modifiziertem Schichtsilicat.

11. Verwendung eines organisch modifizierten (organophilen) Schichtsilicats, wobei zur Modifikation quaternäre Oniumverbindungen mit mindestens einer langkettigen C₁₀- bis C₂₂-Alkylgruppe und mindestens einem aromatischen Substituenten verwendet werden,
oder
eines Gemisches aus einem nicht organisch modifizierten Schichtsilicat und einem mindestens zu 75%, bezogen auf die gesamte Kationenaustauschkapazität (KAK), organisch modifiziertem Schichtsilicat,
zur Adsorption von Myktoxinen, insbesondere in Futtermitteln oder Futtermittel-Zusätzen.

## Claims

1. A mycotoxin adsorbent, containing
a) an organically modified (organophilic) layered silicate, wherein, for the modification, quaternary onium compounds with at least one long-chain C₁₀ to C₂₂ alkyl group and at least one aromatic substituent are used, and wherein 2 to 15 % of the exchangeable cations of the layered silicate are exchanged for quaternary onium compounds,
or
b) a mixture of a non-organically modified layered silicate and an at least up to 75 %, in relation to the entire cation exchange capacity (CEC), organically modified layered silicate.

2. A mycotoxin adsorbent according to Claim 1, **characterised in that** a quaternary ammonium compound, in particular with a C₁₄ to C₁₈ alkyl group, is used as the quaternary onium compound.

3. A mycotoxin adsorbent according to Claim 1 or 2, **characterised in that** stearyl-benzyl-dimethyl-ammonium chloride, cocosalkyl-dimethyl-benzyl-ammonium chloride, dimethyl-lauryl-benzyl-ammonium chloride, distearyl-methyl-benzyl-ammonium chloride or quaternised tallow fat-immidazolinium-methasulphate is used as the quaternary onium compound.

4. A mycotoxin adsorbent according to any one of the preceding Claims, **characterised in that** a smectitic clay mineral is used as the layered silicate.

5. A mycotoxin adsorbent according to any one of the preceding Claims, **characterised in that** a montmorillonite-containing clay, in particular bentonite, is used as the layered silicate.

6. A mycotoxin adsorbent according to any one of Claims 1 a), 2 to 5, **characterised in that** 2 to 10 % of the exchangeable cations of the layered silicate are exchanged for quaternary onium compounds.

7. A mycotoxin adsorbent according to any one of Claims 1 b), 2 to 5, **characterised in that** the mixture contains 0.1 to 50 % by weight, in particular 0.5 to 20 % by weight, and preferably 0.5 to 10 % by weight, of organically modified layered silicate.

8. A mycotoxin adsorbent according to any one of Claims 1 b), 4, 5, 7, **characterised in that**, for the organic modification, quaternary onium compounds with at least one long-chain C₁₀ to C₂₂ alkyl group and at least one aromatic substituent are used.

9. A feedstuff additive, containing a mycotoxin adsorbent as defined in any one of the preceding Claims.

10. A premix for preparing a mycotoxin adsorbent or feedstuff additive as defined in any one of Claims 1 to 8, containing more than 50 % of organically modified layered silicate.

11. Use of an organically modified (organophilic) layered silicate, wherein, for the modification, quaternary onium compounds with at least one long-chain C₁₀ to C₂₂ alkyl group and at least one aromatic substituent are used,
or
a mixture of a non-organically modified layered silicate and an at least up to 75 %, in relation to the entire cation exchange capacity (CEC), organically modified layered silicate,
for the adsorption of mycotoxins, in particular in feedstuffs or feedstuff additives.

## Revendications

1. Adsorbant de mycotoxines, contenant
a) un phyllosilicate à modification organique (organophiles) où, pour la modification, on utilise des composés de l'onium quaternaire ayant au moins un groupe alkyle à longue chaîne en C₁₀₋₂₂ et au moins un substituant aromatique, 2 à 15 % des cations échangeables du phyllosilicate étant remplacés par des composés de l'onium quaternaire,
ou
b) un mélange d'un phyllosilicate n'ayant pas subi de modification organique et d'un phyllosilicate ayant subi une modification organique à au moins 75 % par rapport à la totalité de la capacité d'échange de cations (CEC).

2. Adsorbant de mycotoxines selon la revendication 1, **caractérisé en ce qu'**on utilise en tant que composé de l'onium quaternaire un composé de l'ammonium quaternaire, ayant en particulier un groupe alkyle en C₁₄₋₁₈.

3. Adsorbant de mycotoxines selon la revendication 1 ou 2, **caractérisé en ce qu'**on utilise en tant que composé de l'onium quaternaire du chlorure de stéaryl-benzyl-diméthyl-ammonium, du chlorure de (alkyle dérivé de l'huile de coprah)-diméthyl-benzyl-ammonium, du chlorure de diméthyl-lauryl-benzyl-ammonium, du chlorure de distéaryl-méthyl-benzyl-ammonium ou du méthasulfate de (alkyle gras dérivé du suif)-imidazolinium quaternisé.

4. Adsorbant de mycotoxines selon l'une des revendications précédentes, **caractérisé en ce qu'**on utilise en tant que phyllosilicate un minéral argileux smectitique.

5. Adsorbant de mycotoxines selon l'une des revendications précédentes, **caractérisé en ce qu'**on utilise en tant que phyllosilicate une argile contenant de la montmorillonite, en particulier de la bentonite.

6. Adsorbant de mycotoxines selon l'une des revendications la), 2 à 5, **caractérisé en ce que** 2 à 10 % des cations échangeables du phyllosilicate sont remplacés par des composés de l'onium quaternaires.

7. Adsorbant de mycotoxines selon l'une des revendications 1b), 2 à 5, **caractérisé en ce que** le mélange contient 0,1 à 50 % en poids, en particulier 0,5 à 20 % en poids et de préférence 0,5 à 10 % en poids d'un phyllosilicate à modification organique.

8. Adsorbant de mycotoxines selon l'une des revendications 1b) 4, 5, 7, **caractérisé en ce qu'**on utilise pour la modification organique des composés de l'onium quaternaire ayant au moins un groupe alkyle à longue chaîne en C₁₀ à C₂₂ et au moins un substituant aromatique.

9. Additif pour l'alimentation animale, contenant un adsorbant de mycotoxines selon l'une des revendications précédentes.

10. Prémélange pour préparer un adsorbant de mycotoxines ou un additif pour l'alimentation animale selon l'une des revendications 1 à 8, contenant plus de 50 % d'un phyllosilicate à modification organique.

11. Utilisation d'un phyllosilicate à modification organique (organophile), auquel cas on utilise, pour la modification, des composés de l'onium quaternaire ayant au moins un groupe alkyle à longue chaîne en C₁₀ à C₂₂ et au moins un substituant aromatique,
ou
d'un mélange constitué d'un phyllosilicate n'ayant pas subi de modification organique et d'un phyllosilicate ayant subi une modification organique d'au moins 75 % par rapport à la totalité de la capacité d'échange de cations (CEC),
pour l'adsorption de mycotoxines, en particulier dans des produits pour l'alimentation animale ou des additifs pour produits pour l'alimentation animale.
